(19) Europäisches Patentamt
European Patent Office
Office européen des brevets

(11) Veröffentlichungsnummer: **0 281 005 B1**


(12) # EUROPÄISCHE PATENTSCHRIFT


(45) Veröffentlichungstag der Patentschrift: **17.06.92**

(51) Int. Cl.5: **C08L 51/04**, C08L 77/00, C08F 285/00, C08F 279/02, //(C08F279/02,212:06,222:04)

(21) Anmeldenummer: **88102703.1**

(22) Anmeldetag: **24.02.88**


(54) **Thermoplastische Formmasse, Verfahren zu deren Herstellung und Verwendung derselben.**


(30) Priorität: **04.03.87 DE 3706885**

(43) Veröffentlichungstag der Anmeldung: **07.09.88 Patentblatt 88/36**

(45) Bekanntmachung des Hinweises auf die Patenterteilung: **17.06.92 Patentblatt 92/25**

(84) Benannte Vertragsstaaten: **BE DE FR NL**

(56) Entgegenhaltungen:
**FR-A- 2 107 491**
**US-A- 3 919 354**
**US-A- 4 427 828**



(73) Patentinhaber: **BASF Aktiengesellschaft**
**Carl-Bosch-Strasse 38**
**W-6700 Ludwigshafen(DE)**

(72) Erfinder: **Taubitz, Christof, Dr.**
**In der Dreispitz 15**
**W-6706 Wachenheim(DE)**
Erfinder: **Seiler, Erhard, Dr.**
**Erpolzheimer Strasse 1**
**W-6700 Ludwigshafen(DE)**
Erfinder: **Heckmann, Walter, Dr.**
**Geiersbergstrasse 2**
**W-6940 Weinheim(DE)**
Erfinder: **Theysohn, Rainer, Dr.**
**Am Bruch 38**
**W-6710 Frankenthal(DE)**





Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine thermoplastische Formmasse enthaltend, jeweils bezogen auf A + B,

A 5 bis 95 Gew.%, mindestens eines Harzes, das aufgebaut aus,

- $a_1$ mindestens einem vinylaromatischen Monomeren mit 8 bis 12 C-Atomen
- $a_2$ mindestens einem Monomeren aus der Gruppe der $\alpha$-$\beta$ ungesättigten Dicarbonylverbindungen und
- $a_3$ mindestens einem Elastomeren (Kautschuk),

und

B 95 bis 5 Gew.% mindestens eines modifizierten Polyamides.

Zum Stand der Technik nennen wir die DE-OS 30 37 520. Polystyrol und Polyamid (PA) sind miteinander unverträglich. Polystyrol ist ein spröder Kunststoff. Durch Polymerisation von Styrol in Gegenwart von Kautschuken erhält man schlagzähmodifiziertes Polystyrol (HIPS). Nachteilig ist die geringe Wärmestabilität und geringe Lösungsmittelbeständigkeit.

In der DOS 30 37 520 wird versucht, diesen Nachteil zu kompensieren, indem man Styrol-Maleinsäureanhydrid-Copolymere mit PA abmischt. Nachteilig ist die schlechte Verarbeitbarkeit und die nicht ausreichende Schlagzähigkeit der Mischungen.

In der FR-A-2 107 491 und der US-A-4 427 828 werden Formmassen aus mit $\alpha$, $\beta$-ungesättigten Dicarbonylverbindungen modifizierten Elastomeren und nicht modifizierter Polyamiden beschrieben. Nachteilig ist ebenfalls die geringe Schlagzähigkeit der Mischungen.

Diese Nachteile werden durch die Formmasse gemäß Patentanspruch 1 behoben.

Die Erfindung betrifft daher eine thermoplastische Formmasse enthaltend, jeweils bezogen auf A + B.

A 5 bis 95 Gew.% mindestens eines Harzes, das aufgebaut ist aus,

- $a_1$ mindestens einem vinylaromatischen Monomeren mit 8 bis 12 C-Atomen
- $a_2$ mindestens einem Monomeren aus der Gruppe der $\alpha$-$\beta$ ungesättigten Dicarbonylverbindungen und
- $a_3$ mindestens einem Elastomeren (Kautschuk), und

B 95 bis 5 Gew.% mindestens eines modifizierten Polyamids, das hergestellt wird aus

$B_1$ mindestens 50 Gew.% eines Polyamids und

$B_2$ mindestens 0,1 Gew.% eines Polymerisates aus im wesentlichen Ethylen un polymerisierbaren Carbonsäuren und/oder deren Derivaten.

Diese Formmasse ist dadurch gekennzeichnet, daß als Harz A ein solches verwendet wird, das erhalten worden ist durch an sich bekannte Polymerisation (Propfung) des vinylaromatischen Monomeren $a_1$ in Gegenwart des Elastomeren $a_3$ zu einem nichtmodifizierten Harz, das danach in der Schmelze bei Temperaturen von 120 bis 280 °C in Gegenwart des Monomeren $a_2$ umgesetzt (modifiziert) wird, mit der Maßgabe, daß die Monomeren und das Elastomere in solchen Mengen umgesetzt werden, daß das modifizierte Harz, bezogen auf A, aufgebaut ist aus

- $a_1$ 97 bis 50 Gew.%
- $a_2$ 0,05 bis 10 Gew.%
- $a_3$ 3 bis 50 Gew.%.

Nachstehend werden der Aufbau der Formmasse aus den Komponenten, die Herstellung der Komponenten und die der Formmasse beschrieben.

Die Formmasse enthält, jeweils bezogen auf A + B, folgende Anteile der Komponenten:

- A: 5 bis 95 Gew.%, vorzugsweise 10 bis 60 Gew.%, insbesondere 15 bis 50 Gew.%
- B: 95 bis 5, vorzugsweise 90 bis 40 Gew.%, insbesondere 85 bis 50 Gew.%.

Vorzugsweise besteht die Formmasse aus den genannten Komponenten. Zusätzlich kann die Formmasse, bezogen auf 100 Gew.-Teile A + B, mindestens eine der Komponenten C, D und E in den folgenden Anteilen enthalten:

das hergestellt wird aus

- $B_1$ mindestens 50 Gew.-% eines Polyamids und
- $B_2$ mindestens 0,1 Gew.-% eines Polymerisates aus im wesentlichen Ethylen und polymerisierbaren Carbonsäuren und/oder deren funktionellen Derivaten.
- C: 1 bis 100 Gew.-Teile, vorzugsweise 5 bis 40 Gew.-Teile, insbesondere 5 bis 20
- D: 1 bis 40 Gew.-Teile, vorzugsweise 5 bis 25 Gew.-Teile

E: 1 bis 100 Gew.-Teile, vorzugsweise 5 bis 40 Gew.-Teile.

Komponente A

Die Komponente A der erfindungsgemäßen Formmasse ist aufgebaut aus

$a_1$ mindestens einem vinylaromatischen Monomeren mit 8 bis 12 C-Atomen

$a_2$ mindestens einem Monomeren aus der Gruppe der $\alpha$-$\beta$ ungesättigten Dicarbonylverbindungen

$a_3$ mindestens einem Elastomeren (Kautschuk).

Die Komponente A ist ein modifiziertes Harz, das an sich bekannt ist (vgl. Deutsche Patentanmeldung P 36 15 853.4 - O.Z. 0050/38437). Es wird hergestellt nach einem besonderen Verfahren aus einem aus den Monomeren $a_1$ und dem Elastomeren $a_3$ nichtmodifizierten Harz durch Umsetzung mit den Monomeren $a_2$.

Das vinylaromatische Monomere $a_1$ wird bevorzugt ausgewählt aus der Gruppe Styrol, $\alpha$-Methylstyrol und/oder p-Methylstyrol. In untergeordneten Mengen können auch noch Comonomere, wie (Meth)acrylate oder (Meth)acrylsäure miteingesetzt werden, im allgemeinen fehlen die Comonomeren. Besonders bevorzugt wird Styrol alleine verwendet.

Die Monomeren $a_2$ werden ausgewählt aus gegebenenfalls substituierten $\alpha$-$\beta$-ungesättigten Dicarbonyl-Verbindungen, wie $\alpha$-$\beta$-ungesättigten Dicarbonsäuren, Dicarbonsäureanhydriden, Dicarbonsäureimiden, die gegebenenfalls N-substituiert sind, Monoester der Dicarbonsäuren, Monoamide der Dicarbonsäure, Diester der Dicarbonsäuren, Diamide der Dicarbonsäuren.

Bevorzugt sind Maleinsäure, Maleinsäureanhydrid, Methylmaleinsäureanhydrid, Chlormaleinsäureanhydrid, die Halbester und Halbamide, wie der Halbester aus Maleinsäureanhyxdrid mit 2-Ethylhexylalkohole, außerdem N-Phenylmaleinimid, außerdem Fumarsäure, Fumarsäurehalbester, Fumarsäurediester, besonders bevorzugt Fumarsäure und Fumarsäuredimethylester.

Als Elastomere $a_3$ (kautschukartiges Polymerisat) werden Polybutadien-, Styrol-Butadien-Copolymerisate und Styrol-Butadien-Block-Kautschuke angewendet, wobei der Blockkautschuk in der dem Fachmann bekannten Form vorliegen kann, wie scharf getrennte oder verschmierte Blöcke, AB, ABA, ABAB, ABC, sternförmig usw. (s. auch Winnacker-Küchler, "Chemische Technologie", Bd. 6, S. 373). Von den Blockkautschuken werden insbesondere die linearen Zweiblockcopolymerisate mit 15 bis 75 Gew.% Blockstyrolgehalt und 85 bis Gew.% Butadien angewendet. Diese weisen mittlere Molekulargwichte (Gewichtsmittel) im Bereich von 10 000 bis 2 Mio, vorzugsweise von 50 000 bis 200 000 auf.

Besonders bevorzugt wird anstelle der genannten Zweiblockcopolymerisate Homopolybutadien mit Molekulargewichten im Bereich von 50 000 bis 450 000 (Gewichtsmittel) vom Typ der medium oder high-cis Typen angewendet.

Besonders bevorzugt wird somit schlagfestes Polystyrol mit Fumarsäure modifiziert.

Das nichtmodifizierte schlagfeste Harz A wird in bekannter Weise hergestellt durch Polymerisation der vinylaromatischen Monomeren $a_1$ in Gegenwart des Elastomeren $a_3$.

Bei der bevorzugten Arbeitsweise wird im allgemeinen das Elastomere $a_3$ (der Kautschuk) in dem monomeren vinylaromatischen Monomeren (Styrol) gelöst und diese Ausgangslösung dann entweder in Masse, Lösung oder nach einem kombinierten Masse-Suspension-Verfahren kontinuierlich oder diskontinuierlich polymerisiert. Die kontinuierliche Masse- oder Lösungspolymerisation ist beispielsweise in den US-Patentschriften 2,694,692 und 3, 243,481 oder der DE-OS 17 70 392 beschrieben. Die diskontinuierliche Verfahrensweise der kombinierten Masse-Suspensionspolymerisationist z.B. aus der DE-OS 15 95 230 bekannt.

Zur Herstellung des modifizierten Harzes A ist es erforderlich, daß vorzugsweise in Abwesenheit von Initiatoren das nichtmodifizierte Harz A mit den Monomeren $a_2$, in der Schmelze umgesetzt wird.

Im allgemeinen beträgt die Temperatur 120 bis 280 °C, insbesondere 140 bis 240 °C. Zur Umsetzung geeignet sind an sich bekannte Mischvorrichtungen, wie Brabendermischer, Ein- oder Zweischneckenextruder. Vorzugsweise verwendet man dafür einen Zweischneckenextruder mit im gleichen Sinne rotierenden Schneckenwellen in einem Viskositätsbereich während der Reaktion in der Schneckenmaschine von etwa 0,01 bis 300 Pas, wobei die Schmelze (das Reaktionsgemisch) in einer Schneckenzone mit intensiv mischenden Knetelementen bei Knetfrequenzen bis 15 Hertz und mit einem Geschwindigkeitsgefälle im radialen Spiel zwischen Kamm und Gehäusewand von mehr als 2 000 $sec^{-1}$ bearbeitet wird.

Durch diese Maßnahmen wird das nichtmodifizierte Harz A mit den Monomeren $a_2$ intensiv radial gemischt, daß die Reaktion homogen abläuft und ein Anhaften des Stoffes an den Schneckenwellen und Gehäusewänden verhindert wird. Es ist bevorzugt, daß die Reaktion in Schneckenmaschinen mit üblichen radialen Spielen von je nach Schneckengröße 0,1-0,6 mm bei Schneckendrehzahlen über 150 U/min erfolgt. So beträgt z.B. die bei einer zweiwelligen Schneckenmaschine mit 53 mm Außendurchmesser der Schnecken und einem Radialspiel von 0,2 mm mit Erfolg angewandte Drehzahl 200 U/min. Geeignete Knetelemente sind z.B. die in DE-PS 813 154 und DE-PS 940 109 beschriebenen und in den Fig. 2-6 im Querschnitt dargestellten prismatischen Scheiben verschiedener Geometrie, die sich bis auf das maschinentechnisch notwendige kleine Spiel in jeder Stellung gegenseitig abschaben und im Zusammenwirken mit den Gehäusegraten (18, 19) auf den zu mischenden Stoff hohe Scher- und Reibungskräfte ausüben. Mehrere derartige Knetscheiben, auf der Welle in Umfangsrichtung jeweils versetzt angeordnet, ergeben eine Knetzone (7, 8, 9 in Fig. 1).

Die mittlere Verweilzeit sowohl in Knet- als auch Reaktionszone beträgt im allgemeinen 0,5 bis 20 Min., bevorzugt 1 bis 7 Minuten.

Das nichtmodifizierte Harz A and $a_2$ (gegebenenfalls mit z.B. Schmiermittel) werden vorzugsweise gemeinsam dosiert und in einem Aufschmelzteil aufgeschmolzen. Die Extruderschnecke im Aufschmelzteil enthält bevorzugt Knetelemente. An die Aufschmelzzone schließt sich die Reaktionszone an, die bevorzugt Knetelemente und zusätzlich Knetelemente mit rückwärts förderndem Gewinde enthält. Vor dem Produktaustrag befindet sich bevorzugt eine Entgasungszone zur Entfernung der flüchtigen Bestandteile. Die ausgetragene Schmelze wird im allgemeinen granuliert.

Für die Herstellung des modifizierten Harzes aus dem nicht modifizierten Harz und den Monomeren $a_2$ werden die Monomeren und das Elastomere in solchen Mengen angewendet, daß das modifizierte Harz, bezogen auf A, aufgebaut ist aus

$a_1$ 97 bis 50 Gew.%, vorzugsweise 97 bis 70 Gew.%, insbesondere 95 bis 80 Gew.%
$a_2$ 0,05 bis 10 Gew.%, vorzugsweise 0,5 bis 4 Gew.%
$a_3$ 3 bis 50 Gew.%, vorzugsweise 3 bis 30 Gew.%, insbesondere 5 bis 20 Gew.%

Komponente B

Als Polyamide im Sinne der vorliegenden Erfindung werden modifizierte Polyamide verwendet werden, die in der Deutschen Patentanmeldung P 36 04 348.6 - O.Z. 0050/38266 beschrieben sind. Demgemäß kann die Komponente B auch ein Polyamid darstellen, das hergestellt wird aus

$B_1$ mindestens 50 Gew.% eines Polyamids und
$B_2$ mindestens 0,1 Gew.% eines Polymerisats aus im wesentlichen Ethylen und polymerisierbaren Carbonsäuren und/oder deren funktionellen Derivaten.

Bevorzugt beträgt der Anteil des Polyamide $B_1$ 55-98, besonders bevorzugt 75-95 Gew.% und der des Copolymeren $B_2$ 2-45, besonders bevorzugt 5-25 Gew.%.

Als Komponente $B_1$ werden Polyamids mit einem Molekulargewicht von 5 000-60 000, insbesondere von 10 000-40 000 bevorzugt. Als Beispiele seien genannt Polyamide, die sich von Lactamen mit 7 bis 13 Ringgliedern ableiten, wie Polycaprolactam, Polycapryllactam oder Polyaurinlactam sowie Polyamide, die durch Umsetzung von Dicarbonsäuren mit Diaminen erhalten werden. Geeignete Dicarbonsäuren, die auch in beliebigen Kombinationen einsetzbar sind, sind beispielsweise Alkandicarbonsäuren mit 6 bis 12, insbesondere 6 bis 10 Kohlenstoffatomen, Terephthalsäure und Isophthalsäure. Geeignete Diamine, die auch in beliebigen Kombinationen einsetzbar sind, sind beispielsweise Alkandiamine mit 6 bis 12, insbesondere 6 bis 8 Kohlenstoffatomen, ferner x-Xylylendiamin, Bis-(4-aminophenyl)methan, Bis(4-aminocyclohexyl)methan oder 2,2-Di(4-aminophenylpropan). Es ist auch möglich und manchmal vorteilhaft, Mischungen von Polyamiden zu verwenden. Besondere technische Bedeutung haben Polycaprolactam, Polyhexamethylenadipinsäureamid sowie Polyamide, die aus Hexamethylendiamin und Iso- oder Terephthalsäure aufgebaut sind, erlangt.

Die erfindungsgemäß verwendbaren Polyamide sind an sich bekannt, im Handel erhältlich oder können nach den an sich bekannten Verfahren aus den Monomeren hergestellt werden.

Als Komponente $B_2$ enthalten die modifizierten Polyamide ein Polymerisat aus im wesentlichen Ethylen, welches mindestens eine Carbonsäuregruppe oder eine Gruppe eines funktionellen Derivats einer polymerisierbaren Carbonsäure enthält. Als funktionelle Derivate seien beispielsweise Anhydride, Imide, Amide, Ester und Alkali- bzw. Erdalkalimetallsalze von Carbonsäuren genannt. Vorzugsweise ist das Polymerisat $B_2$ aufgebaut aus

$b_1$) 50 - 99 Gew.% Ethylen
$b_2$) 1-50 Gew.% einer polymerisierbaren Carbonsäure und/oder deren funktionellen Derivaten
$b_3$) 0-40 Gew.% weiteren Monomeren.

Zur Herstellung des Polymerisats $B_2$ kann das Ethylen mit den anderen Monomeren copolymerisiert werden; die Carbonsäure- bzw. Carbonsäurederivatgruppen können aber z.B. auch durch Propfung in ein Ethylenpolymer eingeführt werden.

Als Monomere $b_2$ seien beispielsweise alpha-beta-ungesättigte Carbonsäuren und Dicarbonsäuren, insbesondere mit 3-8 C-Atomen und deren funktionelle Derivate, insbesondere Anhydride, Imide, Amide, Ester und Salze genannt. Hier sind z.B. Acrylsäure, Methylsäure, Fumarsäure, Itaconsäure, Maleinsäureanhydrid, Methylenaleinsäureanhydrid, Chlormaleinsäureanhydrid, Citraconsäureanhydrid, Butenylbernsteinsäureanhydrid, Tetrahydrophthalsäureanhydrid, deren Salze, N-Phenyl-imide und Halbester und Ester von Alkoholen mit 1-29 C-Atomen und Amide der vorstehenden Säuren zu nennen.

Acrylsäure, Methacrylsäure und deren Ester mit 3-29 C-Atomen, wie z.B. n-Propylacrylat, i-Propylacrylat, n-Butylacrylat, i-Butylacrylat, 2-Ethylhexylacrylat sowie Maleinsäureanhydrid werden besonders bevorzugt. Diese Monomeren können auch als Mischungen eingesetzt werden, so daß man z.B. Ethylen/n-Butylacrylat/Methacrylat, Ethylen/-n-Butylacrylat/-Maleinsäureanhydrid, Ethylen/2-Ethylhexylacrylat/(Meth)-acrylsäure und Ethylen/2-Ethylhexylacrylat/Maleinsäureanhydrid-Polymere erhält.

(Meth)acrylsäurehaltige Polymere enthalten bevorzugt

$b_1$) 50-98 Gew.% Ethylen
$b_2$) 2-7 Gew.% (Meth)acrylsäure
0-42 Gew.% n-Butyl oder 2-Ethylhexylacrylat

während Maleinsäureanhydrid enthaltende Polymere bevorzugt aufgebaut sind aus

$b_1$) 50-99,9 Gew.% Ethylen
$b_2$) 0,1-10 Gew.% Maleinsäureanhydrid
0-49 Gew.% n-Butyl oder 2-Ethylhexylacrylat.

Als Monomere $b_3$) können gegebenenfalls alpha-Olefine mit 3 oder mehr C-Atomen, z.B. Propen, Buten-1, Penten-1, Hexen-1, Decen-1, und Vinylacetat eingesetzt werden. Der Anteil beträgt bis zu 40 Gew.%, bezogen auf die Summe der Komponenten $b_1$) + $b_2$) + $b_3$).

Copolymerisationsverfahren zur Herstellung der vorstehend beschriebenen Copolymere sind an sich bekannt. Üblicherweise erfolgt die Polymerisation bei erhöhter Temperatur unter hohem Ethylendruck.

Eine weitere Möglichkeit zur Herstellung der Komponente $B_2$ liegt darin, carboxylgruppenfreie Ethylenpolymere, die gegebenenfalls bis zu 40 Gew.% der vorstehend genannten alpha-Olefine mit mehr als 3 C-Atomen enthalten, in an sich bekannter Weise mit Carboxyl- oder Carboxylderivatgruppen enthaltenden Monomeren zu propfen, vorzugsweise unter Verwendung von Peroxiden. Als Propfmonomere sind beispielsweise Acrylsäure, Methacrylsäure, Maleinsäureanhydrid oder die entsprechenden Ester geeignet. Es ist auch möglich, Ethylen/(Meth)acrylat-Copolymere mit den vorgenannten Monomeren zu propfen, d.h. Copolymerisation und Propfung zu kombinieren. Bevorzugte Beispiele sind Ethylenpolymere, wie EPDM-Kautschuke, auf die 0,1-1,5 Gew.% Maleinsäureanhydrid oder 0,5-8 Gew.%(Meth)acrylsäure aufgepropft sind oder Ethylen/Butylacrylat-Copolymere (60-80 Gew.% Ethylen, 20-40 Gew.% Butylacrylat), auf welche 0,1-1,5 Gew.% Maleinsäureanhydrid aufgepropft sind.

Verfahren zur Herstellung solcher Propfpolymere sind an sich bekannt; beispielsweise können die Bestandteile bei Temperaturen von 150-300 °C, vorzugsweise unter Zusatz von Peroxiden, wie z.B. Diisopropylperoxid oder Dicumylperoxid im Extruder gemischt werden.

Polymere $B_2$ mit einer Glasübergangstemperatur unterhalb von 0 °C, vorzugsweise unter -20 °C werden bevorzugt. Diese sind im allgemeinen hochmolekular und weisen einen Schmelzindex von 1 bis 80g/10 min (nach DIN 53 735 bei 190 °C und 2,16 kg Belastung) auf.

Zur Herstellung des modifizierten Polyamids werden die Komponenten $B_1$ und $B_2$ im allgemeinen in einem Mischer oder Extruder bei Temperatur im Bereich von 180-310 °C, vorzugsweise von 220-280 °C und Verweilzeiten von 0,5-15, vorzugsweise 1-10 Minuten gemischt. Dabei tritt in der Regel zumindest eine teilweise Umsetzung der Komponenten $B_1$ und $B_2$ miteinander ein.

Komponente C

Als Komponente C kommt ein vinylaromatische Monomere mit 8 bis 12 C-Atomen enthaltendes Harz in Frage, das vorzugsweise durch Einbau von Elastomeren schlagzäh gemacht wird (vgl. auch das nichtmodifizierte Harz A der vorliegenden Erfindung).

Als Komponente C der erfindungsgemäßen Formmasse kommen somit Homopolymerisate oder Copolymerisate von Styrol mit einem der eng verwandten insbesondere methylsubstituierten Styrole in Frage, in denen ein Methylrest als Substituent am aromatischen Ring oder an der Seitenkette vorhanden ist. Hier ist vor allem p-Methylstyrol zu erwähnen. Diese Copolymerisate können aus Styrol bzw. substituiertem Styrol in an sich bekannter Weise hergestellt werden. Als Styrolpolymerisate kommen ferner Propfmischpolymerisate in Frage, die durch Polymerisation von Styrol oder substituiertem Styrol in Gegenwart eines Kautschuks, z.B. eines Butadienpolymerisates oder kautschukartigen Styrol-Butadien-Copolymerisats, hergestellt werden. Der Polybutadiengehalt kann 3 bis 50 Gew.%, vorzugsweise 5 bis 30 Gew.% betragen. Der Kautschuk liegt dabei fein dispergiert in einer als Hartmatrix bezeichneten Polystyrolphase vor. Die Herstellung derartiger schlagfester Polystyrole ist dem Fachmann bekannt. Polystyrole und Polymerisate substituerter Styrole sind, ebenso wie die schlagfesten Polystyrole, im Handel erhältlich. Die Viskositätszahl der Komponente C soll im Bereich von 60 bis 120 ml/g liegen.

Ferner seien genannt die Styrol und Acrylnitril enthaltenden Copolymerisate, wie SAN mit VZ von 70 bis 116, sowie die Propfcopolymerisate von Styrol und Acrylnitril auf Polybutadien (ABS). Alle diese Produkte sind im Handel erhältlich

Komponente D

Als Komponente D wird mindestens ein schlagzähmodifizierender Kautschuk verwendet. Bevorzugt werden solche eingesetzt, die Polystyrol schlagfest modifizieren und/oder solche, die Polyamid modifizieren. Solche sind dem Fachmann bekannt.

Es kommen daher in Frage Kautschuke, wie Polybutadien-Kautschuk, Acrylat-Kautschuk, Styrol-Butadien-Kautschuk, Polybuten-Kautschuk, hydrierter Styrol-Butadien-Kautschuk, Acrylnitril-Butadien-Kautschuk, Ethylen-Propylen-Kautschuk, Polyisopren-Kautschuk. Als Kautschuke für diesen Zweck seien weiter erwähnt styrolgepropfte Ethylen-Propylen-Kautschuke, thermoplastische Ethylen-Propylen-Kautschuke, thermoplastische Polyester-Elastomere, Ethylenkautschuke und Ionomere, Styrol-Butadien-Blockcopolymere einschließlich AB-, ABA-, ABAA-tapering, Stern- und Blockpolymerisaten, entsprechenden Isopren-Blockcopolymerisate und teilweise oder vollständig hydrierte Blockcopolymere.

Komponente E

Zusätzlich zu den zwingend vorhandenen Komponenten A und B können die erfindungsgemäßen thermoplastischen Formmassen übliche Zusatzstoffe und Verarbeitungshilfsmittel enthalten. Solche üblichen Zusatzstoffe sind beispielsweise Hitze- und Lichtstabilisatoren, Gleit- und Entformungsmittel, und Färbemittel, wie z.B. Farbstoffe und Pigmente. Weiterhin zählen hierzu Verstärkungsmittel wie Glasfasern, Asbestfasern, Kohlenstoff-Fasern, aromatische Polyamidfasern und/oder Füllstoffe, Gipsfasern, synthetische Calciumsilikate, Kaolin, calciniertes Kaolin, ferner Phosphor oder phosphorhaltige Verbindungen.

Auch niedermolekulare oder hochmolekulare Polymere, Polyester, Polycarbonate, Nitrilkautschuk und Dien-Öle oder Wachse sind als Zusatzstoffe verwendbar.

Herstellung der erfindungsgemäßen Formmasse:

Verfahren zur Herstellung der thermoplastischen Formmasse sind an sich bekannt. Zweckmäßigerweise mischt man die Einzelkomponenten A (oder die Vorstufe von A mit den Monomeren $a_2$), B und gegebenenfalls, C, D und E bei Temperaturen von 140-320 °C, insbesondere 250-320 °C in üblichen Mischvorrichtungen, z.B. Knetern, Banbury-Mischern und Einschneckenextrudern, vorzugsweise in Zweischneckenextrudern, wie unter A beschrieben. Um eine möglichst homogene Formmasse zu erhalten, ist eine intensive Durchmischung notwendig; unter bestimmten Umständen können die die Formmasse bildenden Komponenten auch miteinander reagieren. Die Mischungsreihenfolge der Komponenten kann variiert werden. Das heißt, es können alle Komponenten gemeinsam gemischt werden oder es können zwei oder drei Komponenten vorgemischt werden, bevor die weiteren Komponenten zugesetzt werden.

Die verträglichkeitsverbessernde Wirkung der Komponenten der Formmasse ist wahrscheinlich auf eine Wechselwirkung der funktionellen Gruppe der Komponente A mit der Komponente B zurückzuführen. Ob es sich dabei um physikalische Wechselwirkungen oder um die Ausbildung kovalenter Bindungen handelt, kann nicht mit Sicherheit gesagt werden.

Die erfindungsgemäßen Formmassen zeichnen sich durch eine außerordentlich hohe Schlagzähigkeit aus. Gegenüber Polyamiden zeigen sie eine stark verminderte Formschrumpfung und eine wesentlich geringere Wasseraufnahme, weswegen sie sich besonders zur Herstellung von Formkörpern mit hoher Dimensionsstabilität eignen. Die Verarbeitung kann durch Blasverformen, wie Extrudieren zur Herstellung von Rohren, Tafeln, Flaschen und Beschichtungen erfolgen.

Die in den Beispielen und Vergleichsversuchen und Vorprodukten beschriebenen Parameter wurden wie folgt bestimmt:

1. Viskositätszahl, Vz, bestimmt bei 230 °C an einer 0,5%igen Lösung in Dimethylformamid für Polyamid und 0,5 %ig Toluol für schlagfestes Polystyrol mit einem Ubbelohde-Viskosimeter nach DIN 53 726/8
2. Schmelzindex MFI bestimmt nach ASTMD 1238 bei 230 °C und 3,80 kg Belastung
3. Zahlenmittel des Molekulargewichts $M_n$, vgl. B. Vollmert, Grundriß der makromolekularen Chemie, Bd. III, S. 122 ff; E. Vollmert-Verlag Karlsruhe 1979.
4. Kerbschlagzähigkeit, $a_{kL}$, nach DIN 53 453 in [kJ/m$^2$].

Zur Herstellung von erfindungsgemäßen Formmassen und von Vergleichsproben wurden folgende Produkte verwendet:

Komponente A

I. Herstellung von schlagzähem Polystyrol $A_1$ (nicht modifiziert)

In einem 5 l Rührkessel mit Blattrührer wurde eine Lösung, bestehend aus 1 600 g Styrol, 150 g eines Butadien/Styrol-Blockpolymerisats mit verschmiertem Übergang zwischen den Blöcken ($\eta$ = 1,58 dl/g in Toluol bei 25 ° C, Block-PS = 39,4 Gew.% mit $\eta$ = 0,470 dl/g, Gesamtstyrolgehalt = 40,5 Gew.%, $M_v$ = 98 000; $M_n$ = 53 000), 45 g Mineralöl, 1,8 g t-Dodecyclmercaptan, 2,2 g Octadecyl-2-(3′,5′-di-tert.butyl-4′-hydroxyphenyl)-propionat und 1,8 g Dicumylperoxid bei 115 ° C Innentemperatur und einer Rührerdrehzahl von 200 Upm bis zu einem Feststoffgehalt von 46,5% vorpolymerisiert. Anschließend wurden 1 800 ml Wasser, die 9,0 g Polyvinylpyrrolidon vom K-Wert 90 und 1,8 g $Na_4P_2O_7$ enthielten, zugesetzt und die Rührerdrehzahl auf 300 Upm erhöht. Durch Nachpolymerisation von 5 Stunden bei 120 ° C und 5 h bei 140 ° C wurde auspolymerisiert, das Polymere abgetrennt und getrocknet.

II. Herstellung von schlagzähem Polystyrol $A_2$ (nicht modifiziert)

6 Teile eines Polybutadiens vom medium-cis-Typ (Diene HX 529) mit einem mittleren Molekulargewicht 300 000 (Gewichtsmittel) wurden in einer Mischung von 6 Teilen Ethylbenzol und 88 Teilen Styrol gelöst. Anschließend wurde die Mischung mit 0,1 Teilen tert.-Dodecylmercaptan und 0,18 Teilen tert.-Butylbenzoat versetzt und bei 118 ° C 2 h und anschließend bei 140 ° C vollständig polymerisiert. Das Polymere wird über einen Extruder aufgearbeitet.

III. Herstellung eines modifizierten Polystyrolharzes $A_{11}$

98,2 Gew.%Polystyrol $A_1$ und 1,8 Gew.% Fumarsäure werden in einem Zweischneckenextruder (ZSK 53) der Firma Werner & Pfleiderer dosiert und in einem ersten Teil unter Verwendung von Knetelementen bei 180 ° C aufgeschmolzen, anschließend in einem zweiten Teil unter Kneten und Verwendung von zurückfördernden Knetelementen bei 200 ° C umgesetzt und anschließend in einer Entgasungszone durch Anlegen von Vakuum entgast. Die mittlere Verweilzeit im Extruder beträgt 4 Min, die Drehzahl 150 Hertz. Die austretende Schmelze wird durch ein Wasserbad geleitet und granuliert. Die eingebaute Menge an Fumarsäure beträgt 0,95 Gew.%.

IV. Herstellung eines modifizierten Polystyrolharzes $A_{21}$

97,5 Gew.% Polystyrolharz $A_2$ und 2,5 Gew.% Fumarsäure werden wie unter III. beschrieben, bei 190 ° C umgesetzt. Die eingebaute Menge an Fumarsäure beträgt 1,2 Gew.%.

Komponente $B_1$

Polycaprolactam mit einer relativen Viskosität von 3,2, entsprechend einem Molgewicht von 40.000

Komponente C

Schlagzähes Polystyrol $A_2$

Komponente $B_2$

Es wurde ein Ethylen-n-Butylacrylat-Maleinsäureanhydrid-Copolymer/ 70/29,5/0,5 Gew.%) mit einem Schmelzindex MFI 190/2,16, DIN 53 735 von 11g/10 Min. verwendet.

Produkt Z

Es wurde für Vergleichszwecke das in Beispiel 5 der DE-OS 30 37 520 beschriebene Styrol-Maleinsäureanhydrid Copolymer (91S/9 MSA) vom Molgewicht $M_w$ = 90 000 verwendet.

Nachstehend wird die erfindungsgemäße Formmasse anhand von Beispielen und Vergleichsversuchen näher erläutert. Alle darin und vorstehend bei der Produktbeschreibung genannten Teile und Prozente beziehen sich auf das Gewicht.

Beispiele 1-6 und Vergleichsversuche I-IV.

Die in der Tabelle genannten Teile wurden auf einem Zweischneckenextruder der Firma Werner & Pfleiderer (Typ ZSK 53) bei 280 ° C gemischt, wobei $B_1$ und $B_2$ auf einem Extruder vorgemischt waren. Die Formmasse wird granuliert und im Spritzguß zu Formkörpern verarbeitet. Die an den Proben gemessenen Werte von Schmelzfluß und Kerbschlagzähigkeit sind ebenfalls in der Tabelle aufgeführt.

Tabelle

| Beispiel | Komponente A Art | Komponente A Menge | B₁ Menge | C Art | C Menge | B₂ Menge | MFI [g/10 Min] | $a_k$ [kJ/m²] |
|---|---|---|---|---|---|---|---|---|
| ~~1~~ | ~~$A_{11}$~~ | ~~30~~ | ~~70~~ | ~~-~~ | ~~-~~ | ~~-~~ | ~~10~~ | ~~2,4~~ |
| 1 | $A_{11}$ | 40 | 60 | - | | 10 | 9 | 11,0 |
| 2 | $A_{21}$ | 30 | 55 | $A_2$ | 15 | 7 | 14 | 8,0 |
| 3 | $A_{21}$ | 35 | 65 | - | | 10 | 12 | 12,0 |
| 4 | $A_{21}$ | 50 | 50 | - | | 12 | 11 | 10,0 |
| 5 | $A_{21}$ | 15 | 85 | - | | 16 | 18 | 14,0 |
| 6 | $A_{21}$ | 25 | 75 | $A_2$ | 10 | 14 | 12 | 13,0 |
| **Vergleichsversuche** | | | | | | | | |
| I | | - | 70 | $A_2$ | 30 | - | 30 | 0,9 |
| II | Z | 30 | 70 | - | | - | 2,1 | 1,8 |
| III | Z | 35 | 65 | - | | 10 | 2,7 | 6,0 |
| IV | $A_{11}$ | 30 | 70 | - | | - | 10 | 2,4 |

## Patentansprüche

1. Thermoplastische Formmasse, enthaltend, jeweils bezogen auf A + B,
   A 5 bis 95 Gew.%, mindestens eines Harzes, das aufgebaut ist aus:

$a_1$ mindestens einem vinylaromatischen Monomeren mit 8 bis 12 C-Atomen
$a_2$ mindestens einem Monomeren aus der Gruppe der $\alpha$-$\beta$ ungesättigten Dicarbonylverbindungen und
$a_3$ mindestens einem Elastomeren (Kautschuk),
und
B 95 bis 5 Gew.% mindestens eines Polyamids,
dadurch gekennzeichnet, daß als Harz A ein solches verwendet wird, das erhalten worden ist durch an sich bekannte Polymerisation (Propfung) des vinylaromatischen Monomeren $a_1$ in Gegenwart des Elastomeren $a_3$ zu einem nichtmodifizierten Harz, das danach in der Schmelze bei Temperaturen von 120 bis 280 °C in Gegenwart des Monomeren $a_2$ umgesetzt (modifiziert) wird, mit der Maßgabe, daß die Monomeren und das Elastomere in solchen Mengen umgesetzt werden, daß das modifizierte Harz, bezogen auf A, aufgebaut ist aus
$a_1$ 97 bis 50 Gew.%
$a_2$ 0,05 bis 10 Gew.%
$a_3$ 3 bis 50 Gew.%, und
daß als Polyamid B ein solches verwendet wird, welches hergestellt ist aus
$B_1$ mindestens 50 Gew.-% eines Polyamids und
$B_2$ mindestens 0,1 Gew.-% eines Polymerisats aus im wesentlichen Ethylen und polymerisierbaren Carbonsäuren und/oder deren funktionellen Derivaten.

2. Thermoplastische Formmasse nach Anspruch 1, bestehend aus den Komponenten A + B.

3. Thermoplastische Formmasse nach Anspruch 1, enthaltend zusätzlich, bezogen auf 100 Gew.-Teile A + B, bis zu 50 Gew.-Teile von Polystyrol, insbesondere Schlagfestes Polystyrol als Komponente C.

4. Thermoplastische Formmasse nach Anspruch 3, enthaltend ferner, bezogen auf 100 Gew.-Teile A + B, bis zu 40 Gew.-Teile einer Komponente D in Form von gepropften oder ungepropften von C verschiedenen Kautschuken.

5. Thermoplastische Formmasse, enthaltend, jeweils bezogen auf A + B,
A 10 bis 60 Gew.%, mindestens eines Harzes, das aufgebaut aus,
$a_1$ mindestens einem vinylaromatischen Monomeren mit 8 bis 12 C-Atomen
$a_2$ mindestens einem Monomeren aus der Gruppe der $\alpha$-$\beta$ ungesättigten Dicarbonylverbindungen
und
$a_3$ mindestens einem Elastomeren (Kautschuk),
und
B 90 bis 40 Gew.% mindestens eines Polyamids,
dadurch gekennzeichnet, daß als Harz A ein solches verwendet wird, das erhalten worden ist durch an sich bekannte Polymerisation (Propfung) des vinylaromatischen Monomeren $a_1$ in Gegenwart des Elastomeren $a_3$ zu einem nichtmodifizierten Harz, das danach in der Schmelze bei Temperaturen von 120 bis 280 °C in Gegenwart des Monomeren $a_2$ umgesetzt (modifiziert) wird, mit der Maßgabe, daß die Monomeren und das Elastomere in solchen Mengen umgesetzt werden, daß das modifizierte Harz, bezogen auf A, aufgebaut ist aus
$a_1$ 97 bis 70 Gew.%
$a_2$ 0,5 bis 4 Gew.%
$a_3$ 3 bis 30 Gew.%, und
daß als Polyamid B ein solches verwendet wird, welches hergestellt ist aus
$B_1$ mindestens 50 Gew.-% eines Polyamids und
$B_2$ mindestens 0,1 Gew.-% eines Polymerisates aus im wesentlichen Ethylen und polymerisierbaren Carbonsäuren und/oder deren funktionellen Derivaten.

6. Thermoplastische Formmasse, enthaltend, jeweils bezogen auf A + B,
A 15 bis 50 Gew.%, mindestens eines Harzes, das aufgebaut aus,
$a_1$ Styrol
$a_2$ Fumarsäure
und
$a_3$ mindestens einem Elastomeren (Kautschuk) aus der Gruppe von Polybutadien oder Blockcopolymerisaten des Butadiens und des Styrols
und

B 50 bis 85 Gew.% mindestens eines Polyamids,

dadurch gekennzeichnet, daß als Harz A ein solches verwendet wird, das erhalten worden ist durch an sich bekannte Polymerisation (Propfung) des vinylaromatischen Monomeren $a_1$ in Gegenwart des Elastomeren $a_3$ zu einem nichtmodifizierten Harz, das danach in der Schmelze bei Temperaturen von 140 bis 240 °C in Gegenwart des Monomeren $a_2$ umgesetzt (modifiziert) wird, mit der Maßgabe, daß die Monomeren und das Elastomere in solchen Mengen umgesetzt werden, daß das modifizierte Harz, bezogen auf A, aufgebaut ist aus

$a_1$ 95 bis 80 Gew.%
$a_2$ 0,5 bis 4 Gew.%
$a_3$ 5 bis 20 Gew.%, und

daß als Polyamid B ein solches verwendet wird, welches hergestellt ist aus

$B_1$ mindestens 50 Gew.-% eines Polyamids und
$B_2$ mindestens 0,1 Gew.-% eines Polymerisates aus im wesentlichen Ethylen und polymerisierbaren Carbonsäuren und/oder deren funktionellen Derivaten.

**7.** Verfahren zur Herstellung der Formmasse gemäß Anspruch 1 durch an sich bekanntes Mischen der Komponenten A und B oder von Vorstufen davon in üblichen Mischaggregaten bei Temperaturen von 140-320 °C.

**8.** Verwendung von Formmassen nach Anspruch 1 zur Herstellung von Formteilen.

**9.** Formteile aus Formmassen gemäß Anspruch 1.

## Claims

**1.** A thermoplastic molding material containing
A from 5 to 95% by weight of one or more resins which are composed of

$a_1$ one or more vinylaromatic monomers of 8 to 12 carbon atoms,
$a_2$ one or more monomers from the group consisting of the $\alpha$, $\beta$-unsaturated dicarbonyl compounds and
$a_3$ one or more elastomers (rubbers),
and

B from 95 to 5% by weight of one or more nylons, the percentages in each case being based on A + B, wherein the resin A used is one which has been obtained by conventional polymerization (grafting) of the vinylaromatic monomers $a_1$ in the presence of the elastomer $a_3$ to give an unmodified resin, which is then reacted (modified) in the melt at from 120 to 280 °C in the presence of the monomer $a_2$, with the proviso that the monomers and the elastomer are reacted in amounts such that the modified resin is composed of
from 97 to 50% by weight of $a_1$,
from 0.05 to 10% by weight of $a_2$ and
from 3 to 50% by weight of $a_3$,
the percentages being based on A, and that the polyamide
B used is one which is prepared from
$B_1$ not less than 50% by weight of a polyamide and
$B_2$ not less than 0.1% by weight of a polymer of essentially ethylene and polymerizable carboxylic acids and/or functional derivatives thereof.

**2.** A thermoplastic molding material as claimed in claim 1, consisting of the components A + B.

**3.** A thermoplastic molding material as claimed in claim 1, additionally containing up to 50 parts by weight, based on 100 parts by weight of A + B, of polystyrene, in particular high impact polystyrene, as component C.

**4.** A thermoplastic molding material as claimed in claim 3, furthermore containing up to 40 parts by weight based on 100 parts by weight of A + B, of a component D in the form of grafted or ungrafted rubbers which differ from C.

**5.** A thermoplastic molding material containing
A from 10 to 60% by weight of one or more resins which are composed of
$a_1$ one or more vinylaromatic monomers of 8 to 12 carbon atoms,
$a_2$ one or more monomers from the group consisting of the $\alpha$, $\beta$-unsaturated dicarbonyl compounds and
$a_3$ one or more elastomers (rubbers),
and
B from 90 to 40% by weight of one or more nylons, the percentages in each case being based on A + B, wherein the resin A used is one which has been obtained by conventional polymerization (grafting) of the vinylaromatic monomers $a_1$ in the presence of the elastomer $a_3$ to give an unmodified resin, which is then reacted (modified) in the melt at from 120 to 280°C in the presence of the monomer $a_2$, with the proviso that the monomers and the elastomer are reacted in amounts such that the modified resin is composed of
from 97 to 70% by weight of $a_1$,
from 0.5 to 4% by weight of $a_2$ and
from 3 to 30% by weight of $a_3$,
the percentages being based on A, and that the polyamide
B used is one which is prepared from
$B_1$ not less than 50% by weight of a polyamide and
$B_2$ not less than 0.1% by weight of a polymer of essentially ethylene and polymerizable carboxylic acids and/or functional derivatives thereof.

**6.** A thermoplastic molding material containing
A from 15 to 50% by weight of one or more resins which are composed of
$a_1$ styrene
$a_2$ fumaric acid and
$a_3$ one or more elastomers (rubbers) from the group consisting of polybutadiene and block copolymers of butadiene and of styrene,
and
B from 50 to 85% by weight of one or more nylons, the percentage in each case being based on A + B, wherein the resin A used is one which has been obtained by conventional polymerization (grafting) of the vinylaromatic monomer $a_1$ in the presence of the elastomer $a_3$ to give an unmodified resin, which is then reacted (modified) in the melt at from 140 to 240°C in the presence of the monomer $a_2$, with the proviso that the monomers and the elastomer are reacted in amounts such that the modified resin is composed of
from 95 to 80% by weight of $a_1$,
from 0.5 to 4% by weight of $a_2$ and
from 5 to 20% by weight of $a_3$,
the percentages being based on A, and that the polyamide
B used is one which is prepared from
$B_1$ not less than 50% by weight of a polyamide and
$B_2$ not less than 0.1% by weight of a polymer of essentially ethylene and polymerizable carboxylic acids and/or functional derivatives thereof.

**7.** A process for the preparation of a molding material as claimed in claim 1, by mixing the components A and B or intermediates of these in a manner known per se in a conventional mixing unit at 140-320°C.

**8.** Use of a molding material as claimed in claim 1 for the production of moldings.

**9.** A molding obtained from a molding material as claimed in claim 1.

**Revendications**

**1.** Masse à mouler thermoplastique contenant, chaque fois par rapport à A + B,
A de 5 à 95% en poids d'au moins une résine qui est composée
$a_1$ d'au moins un monomère vinylaromatique à 8-12 atomes de carbone,
$a_2$ d'au moins un monomère du groupe des composés dicarbonylés $\alpha$,$\beta$-insaturés et
$a_3$ d'au moins un élastomère (caoutchouc), et

B de 95 à 5% en poids d'au moins un polyamide,

caractérisé en ce qu'on utilise, comme résine A, une résine qui a été obtenue par polymérisation en soi connue (greffage) du monomère vinylaromatique $a_1$, en présence de l'élastomère $a_3$, la polymérisation donnant une résine non modifiée qui est ensuite transformée (modifiée) à l'état fondu, à des températures de 120 à 280°C, en présence du monomère $a_2$, étant spécifié que les monomères et l'élastomère sont mis en réaction dans des quantités telles que la résine modifiée soit composée, par rapport à A, de

$a_1$ 97 a 50% en poids,
$a_2$ 0, 05 à 10% en poids,
$a_3$ 3 à 50% en poids, et

en ce qu'on utilise, comme polyamide B, un polyamide qui est préparé à partir de

$B_1$ au moins 50% en poids d'un polyamide et
$B_2$ au moins 0,1% en poids d'un polymère composé essentiellement d'éthylène et d'acides carboxyliques polymérisables et/ou de dérivés fonctionnels de ceux-ci.

**2.** Masse à mouler thermoplastique selon la revendication 1, constituée par les composants A + B.

**3.** Masse à mouler thermoplastique selon la revendication 1, contenant en plus, pour 100 parties en poids de A + B, jusqu'à 50 parties en poids de polystyrène, en particulier de polystyrène résistant au choc, en tant que composant C.

**4.** Masse à mouler thermoplastique selon la revendication 3, contenant en outre, pour 100 parties en poids de A + B jusqu'à 40 parties en poids d'un composant D sous forme de caoutchouc greffé ou non greffé, différent de C.

**5.** Masse à mouler thermoplastique contenant, chaque fois par rapport à A + B,

A de 10 à 60% en poids d'au moins une résine qui est composée

$a_1$ d'au moins un monomère vinylaromatique à 8-12 atomes de carbone,
$a_2$ d'au moins un monomère du groupe des composés dicarbonylés $\alpha,\beta$-insaturés et
$a_3$ d'au moins un élastomère (caoutchouc), et

B de 90 à 40% en poids d'au moins un polyamide,

caractérisé en ce qu'on utilise, comme résine A, une résine qui a été obtenue par polymérisation en soi connue (greffage) du monomère vinylaromatique $a_1$, en présence de l'élastomère $a_3$, la polymérisation donnant une résine non modifiée qui est ensuite transformée (modifiée) à l'état fondu, à des températures de 120 à 280°C, en présence du monomère $a_2$, étant spécifié que les monomères et l'élastomère sont mis en réaction dans des quantités telles que la résine modifiée soit composée, par rapport à A, de

$a_1$ 97 à 70% en poids,
$a_2$ 0,5 à 4% en poids,
$a_3$ 3 à 30% en poids, et

en ce qu'on utilise, comme polyamide B, un polyamide qui est préparé à partir de

$B_1$ au moins 50% en poids d'un polyamide et
$B_2$ au moins 0,1% en poids d'un polymère composé essentiellement d'éthylène et d'acides carboxyliques polymérisables et/ou de dérivés fonctionnels de ceux-ci.

**6.** Masse à mouler thermoplastique contenant, chaque fois par rapport à A + B,

A de 15 à 50% en poids d'au moins une résine qui est composée

$a_1$ de styrène,
$a_2$ d'acide fumarique et
$a_3$ d'au moins un élastomère (caoutchouc) du groupe du polybutadiène ou des copolymères séquencés du butadiène et du styrène, et

B de 50 à 85% en poids d'au moins un polyamide,

caractérisé en ce qu'on utilise, comme résine A, une résine qui a été obtenue par polymérisation en soi connue (greffage) du monomère vinylaromatique $a_1$, en présence de l'élastomère $a_3$, la polymérisation donnant une résine non modifiée qui est ensuite transformée (modifiée) à l'état fondu, à des températures de 140 à 240°C, en présence du monomère $a_2$, étant spécifié que les monomères et l'élastomère sont mis en réaction dans des quantités telles que la résine modifiée soit composée, par rapport à A, de

$a_1$ 95 à 80% en poids,
$a_2$ 0,5 à 4% en poids,
$a_3$ 5 à 20% en poids, et

en ce qu'on utilise, comme polyamide B, un polyamide qui est préparé à partir de

$B_1$ au moins 50% en poids d'un polyamide et
$B_2$ au moins 0,1% en poids d'un polymère composé essentiellement d'éthylène et d'acides carboxyliques polymérisables et/ou de dérivés fonctionnels de ceux-ci.

**7.** Procédé de préparation de la masse à mouler selon la revendication 1 par mélange, en soi connu, des composants A et B ou de progéniteurs de ceux-ci dans des appareils mélangeurs usuels à des températures de 140 à 320 ° C.

**8.** Utilisation de masses à mouler selon la revendication 1 pour la fabrication de pièces moulées.

**9.** Pièces moulées faites de masses à mouler selon la revendication 1.